# EUROPEAN PATENT APPLICATION

(11) **EP 4 461 140 A1**
(43) Date of publication of application: **13.11.2024**
(21) Application number: 24175270.8
(22) Date of filing: 10.05.2024
(51) Int. Cl.: A23K 10/38, C11B 1/04, C11B 13/00

(54) **METHOD AND SYSTEM FOR INCREASING OIL YIELD FROM A WHOLE STILLAGE BYPRODUCT PRODUCED IN A CORN DRY-MILLING PROCESS**

(30) Priority: 12.05.2023 US 202363501884 P
(71) Applicant: Fluid Quip Technologies, LLC, Cedar Rapids, Iowa 52402 (US)
(72) Inventor: Jakel, Neal, Cedar Rapids, 52403 (US); Franko, Michael, Denver, 80210 (US)
(74) Representative: Wallinger Ricker Schlotter Tostmann

(57) **Abstract**

A method for increasing oil yield from a whole stillage byproduct produced in a corn dry-milling process for making alcohol (e.g., ethanol) and/or other biofuels/biochemicals and a system therefor is disclosed. In one embodiment, the method includes separating the whole stillage byproduct into an insoluble solids portion and a thin stillage portion. Thereafter, the thin stillage portion can be separated into a water-soluble solids portion, which includes oil, and a protein portion. Oil can be recovered from the water-soluble solids portion. In one example, to break oil in water emulsions in the water-soluble solids portion and increase the oil yield, a treated portion of the recovered oil, which may be heated, may be reintroduced/recycled to the water-soluble solids portion prior to the oil recovery.

## Description

### Technical Field

The present invention relates generally to corn dry-milling, and more specifically, to a method and system for increasing oil yield from a whole stillage byproduct produced in a corn (or similar carbohydrate-containing grain) dry-milling process for making alcohol (e.g., ethanol) and/or other biofuels/biochemicals.

### Background

Corn or similar starch-containing grains contain not only starch but also, for example, protein, individual amino acids, fiber, oil, and minerals. The corn kernel is typically divided up into three main components. The outer protective layer or pericarp, the endosperm, which is the bulk of the kernel material, and the germ or oil-bearing portion of the kernel. The pericarp contains mostly fiber with a small portion of oil bound in the aleurone layer near the outer seed coat. The endosperm contains horny and floury starch components as well as protein. The protein is mainly storage protein or zein protein. The germ contains the bulk of the kernel oil within oil sacks as well as some proteins and key limiting amino acids, sugar, and minerals. Typically, corn contains about 2.7 to 3.2 lb (dry basis) of germ per bushel of corn, and the dry germ has about 50% oil content on a dry basis. More details around the kernel morphology and component constituents can be found in *Corn: Chemistry and Technology,* 2nd Addition, which is expressly incorporated by reference herein in its entirety.

Wet mill corn processing plants convert corn grain into several different natural co-products, such as germ (for oil extraction), gluten feed (high fiber animal feed), gluten meal (high protein animal feed), and starch-based products, including ethanol, high fructose corn syrup, or food and industrial starch. However, because constructing wet-milling plants is complex and capital-intensive, almost all new plants built today are dry-milling plants.

Dry-mill plants, such as ethanol plants, alternatively have a much lower capital cost to build and lower operating cost to operate compared to a wet mill process. Dry-milling plants typically convert corn into three products, i.e., alcohol (e.g., ethanol), distillers corn oil, and distiller's grains with solubles. A typical corn dry-milling process consists of four major steps: grain handling and milling, liquefaction and saccharification, fermentation and distillation, and co-product recovery. Grain handling and milling is the step in which the corn is brought into the plant and ground to promote better starch to glucose conversion. Liquefaction is the step of converting solids, such as starch, to a flowable liquid producing oligosaccharides and saccharification is where the oligosaccharides are converted into single glucose molecules. Fermentation is the process of yeast or bacteria, or as clostridia, for example, converting glucose into a biofuel or a biochemical, such as ethanol. Distillation is the process of removing the biofuel or biochemical, such as ethanol, from the fermentation product. Co-product recovery is the step in which the corn by-products are de-watered and made ready for market. There are many known chemical and biological conversion processes known in the art that utilize yeast, bacteria, or the like to convert glucose to other biofuels and biochemical components like ethanol, for example.

The recovery of alcohol, e.g., butanol, ethanol (a natural co-product), etc., and other similar compounds, generally begins with the beer (spend fermentation broth) being sent to a distillation system. With distillation, ethanol is typically separated from the rest of the beer through a set of stepwise vaporizations and condensations. The beer less the alcohol extracted through distillation is known as whole stillage, which contains a slurry of the spent grains including corn protein, fiber, oil, minerals, sugars, and fermentation agent. This whole stillage byproduct is too diluted to be of much value at this point and is further processed to provide the distiller's grains with soluble.

In typical processing, when the whole stillage leaves the distillation column, it is generally subjected at the back end of the process to a decanter centrifuge to separate insoluble solids or "wet cake", which includes mostly fiber, from the liquid or "thin stillage", which includes, e.g., protein, fine fiber, amino acids, and oil. After separation, the thin stillage moves to evaporators to boil away moisture, leaving a thick syrup that contains the soluble (dissolved) solids. The concentrated slurry can be sent to a centrifuge to separate the oil from the syrup. The oil can be sold as a separate high value product. The oil yield is normally about 0.75 lb/Bu of corn with high free fatty acids content. The free fatty acids content reduces the value of the oil. The de-oil centrifuge only removes less than 50% because the protein and oil make an emulsion, which cannot be satisfactorily separated. Additionally, the oil can be bound within the germ particles, which tends to separate into the wet cake fraction when the whole stillage stream is centrifuged. The concentrated syrup is then typically mixed with the wet cake, and the mixture may be sold to beef and dairy feedlots as distillers wet grain with solubles (DWGS). Alternatively, the wet cake and concentrated syrup mixture may be dried in a drying process and sold as distillers dried grain with solubles (DDGS). The resulting DDGS generally has a crude protein content of about 29% and is a useful feed for cattle and other ruminants due to its protein and fiber content. The resulting product is a natural product.

Various attempts have been made in the dry grinding industry to desirably recover high value co-products, such as oil. Some success has been realized with processes recovering oil after fermentation and from the evaporation stages of the dry mill process. However, the process of mixing and fermentation, coupled with low solids content, emulsifies the oil, and this makes it very difficult to remove. As a result, oil yields have been relatively low. Other attempts have been made to recover oil directly from corn by solvent extraction but the cost, for example, is too high for commercial use.

While DDGS and DWGS provide a critical secondary revenue stream that offsets a portion of the overall alcohol production cost, it would be beneficial to provide an improved method and system for increasing oil yield from grains and/or grain components used for biochemical and/or biofuel production, such as alcohol production in a corn dry-milling process.

### Summary of the Invention

The present invention relates to a method and system for increasing oil yield from a whole stillage byproduct produced in a corn (or similar carbohydrate-containing grain) dry-milling process for making alcohol (e.g., ethanol) and/or other biofuels/biochemicals. The corn includes oil that can be eventually recovered therefrom as a product of the dry-milling process, such as an alcohol dry-milling process.

Corn oil is mainly used in cooking, where its high smoke point makes refined corn oil a valuable frying oil. Corn oil may also be used industrially as a feedstock for biodiesel, aviation fuel, or as an ingredient in soap, solvents, paint, nitroglycerin, insecticides, and as a feed ingredient for animal feed.

In one embodiment of the invention, a method for increasing oil yield from a whole stillage includes separating a whole stillage byproduct into an insoluble solids portion and a thin stillage portion, which includes free oil and protein. Then, prior to any evaporation step, a lighter water soluble solids portion, which includes the oil, is separated out from heavier constituents, including the protein, in the thin stillage portion. The separated water soluble solids portion is subjected to evaporation via an evaporator. After evaporation, the oil from the water soluble solids portion is separated via an oil recovery centrifuge to provide an oil portion. Then, at least a portion of the separated oil portion is returned to a step in the method prior to separating the oil from the water soluble solids portion, whereby oil bound in an oil-in-water emulsion in the portion of the separated oil can be freed. Thereafter, freed oil is recovered via the oil recovery centrifuge.

In another embodiment of the invention, method for increasing oil yield from a whole stillage includes separating a whole stillage byproduct into an insoluble solids portion and a thin stillage portion, which includes free oil and protein. Then, prior to any evaporation step, a lighter water soluble solids portion, which includes the oil, is separated out from heavier constituents, including the protein, in the thin stillage portion, via weights. The separated water soluble solids portion is subjected to evaporation via an evaporator. After evaporation, the oil is separated from the water soluble solids portion via an oil recovery centrifuge to provide an oil portion. Then, at least a portion of the separated oil portion is returned to the whole stillage byproduct, the water soluble solids portion prior to evaporation, or the water soluble solids portion after evaporation. Next, the portion of the separated oil portion is subjected to an oil treatment step prior to or after returning the portion of the separated oil portion to the whole stillage byproduct, the water soluble solids portion prior to evaporation, or the water soluble solids portion after evaporation, whereby oil bound in an oil-in-water emulsion in the portion of the separated oil can be freed. Thereafter, freed oil is recovered via the oil recovery centrifuge.

### Brief Description of the Drawings

The accompanying drawings, which are incorporated in and constitute a part of this specification, illustrate embodiments of the invention and, together with a general description of the invention given above, and the detailed description of the embodiments given below, serve to explain the principles of the invention.
Fig. 1 is a flow diagram of a prior art dry-milling process and system for producing ethanol and distiller's grains with solubles;
Fig. 2 is a flow diagram of a method and system for increasing oil yield from a whole stillage byproduct produced via a corn dry-milling process for making alcohol, e.g., ethanol, in accordance with an embodiment of the invention; and
Fig. 3 is a flow diagram of a method and system for increasing oil yield from a whole stillage byproduct produced via a corn dry-milling process for making alcohol, e.g., ethanol, in accordance with another embodiment of the invention.

### Detailed Description of the Drawings

The present invention is directed to a method and system for increasing oil yield from a whole stillage byproduct produced in a corn dry-milling process for making alcohol (e.g., ethanol) and/or other biofuels/biochemicals.

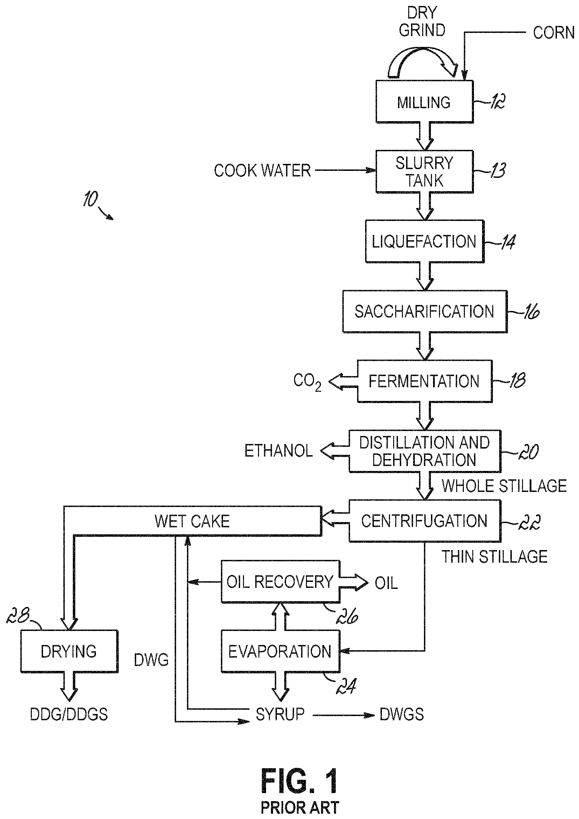

Fig. 1 is a flow diagram of a typical dry grind alcohol (e.g., ethanol) production process 10. Although virtually any type and quality of grain, such as but not limited to sorghum, wheat, triticale, barley, rye, tapioca, cassava, potato, pea, and other starch containing grains can be used to produce ethanol and/or other biofuels/biochemicals, the feedstock for this process is typically corn referred to as "No. 2 Yellow Dent Corn." Also, as a general reference point, the dry grind method 10 can be divided into a front end and a back end. The part of the method 10 that occurs prior to distillation 20 is considered the "front end," and the part of the method 10 that occurs after distillation 20 is considered the "back end." To that end, the front end of dry grind process 10 begins with a milling step 12 in which dried whole corn kernels are passed through hammer mills to grind them into meal or a fine powder. Other milling devices such as roller mills or pin mills can also be utilized in the milling step 12. The screen openings in the hammer mills or similar devices typically are of a size 6/64 to 9/64 inch, or about 2.38 mm to 3.57 mm, but some plants can operate at less than or greater than these screen sizes. The resulting particle distribution yields a very widely spread, bell type curve, which includes particle sizes as small as 45 microns and as large as 2 mm to 3 mm. The majority of the particles generally are in the range of 500 to 1200 microns, which is the "peak" of the bell curve. Other grind profiles such as smaller or larger may also be used in the process.

After the milling step 12, the ground meal is mixed with cook water to create a slurry at the slurry tank 13 and a commercial enzyme such as alpha-amylase is added (not shown). Creating the slurry at the slurry tank 13 is followed by a liquefaction step 14 whereat the pH is adjusted to about 4.8 to 5.8 and the temperature maintained between about 50°C to 105°C so as to convert the insoluble starch in the slurry to soluble starch. The stream after the liquefaction step 14 has about 30% dry solids (DS) content, but can range from about 29-36%, with all the components contained in the corn kernels, including starch/sugars, protein, fiber, starch, germ, grit, oil, and salts, for example. Higher solids are achievable, but this requires extensive alpha amylase enzyme to rapidly breakdown the viscosity in the initial liquefaction step. There generally are several types of solids in the liquefaction stream: fiber, germ, and grit.

Liquefaction 14 may be followed by separate saccharification and fermentation steps, 16 and 18, respectively, which may include a pH and temperature adjustment from the separate liquefaction step 14, although in most commercial dry grind ethanol processes, saccharification 16 and fermentation 18 occur simultaneously. This single step is referred to in the industry as "Simultaneous Saccharification and Fermentation" (SSF). Both saccharification and SSF can take as long as about 50 to 60 hours. In the saccharification step 16, the liquefied mash is cooled and a commercial enzyme, such as gluco-amylase, is added to hydrolyze the maltodextrins and short-chained oligosaccharides into single glucose sugar molecules. In addition to glucoamylase, other enzymes can be added here (as well as to or after fermentation), such as but not limited to phytase, protease, cellulase, hemicellulase, xylanase, gluconase, and the like to further enhance oil recovery, for example. In the fermentation step 18, a common strain of yeast (*Saccharomyces cerevisiae*) can be added to metabolize the glucose sugars into ethanol and CO₂. Other fermentation agents such as bacteria and clostridia can be utilized to produce other biomolecules/ biochemicals. Upon completion, the fermentation mash ("beer") will contain about 17% to 18% ethanol (volume/volume basis), plus soluble and insoluble solids from all the remaining grain components, including fiber, protein, and oil, for example. Yeast can optionally be recycled in a yeast recycling step (not shown). In some instances, the CO₂ is recovered and sold as a commodity product. In addition to glucoamylase, other enzymes can be added to the fermentation step (as well as before or after fermentation), such as but not limited to phytase, protease, cellulase, hemicellulase, xylanase, gluconase, and the like to further enhance protein and/or oil recovery. Subsequent to the fermentation step 18 is the distillation (and dehydration) step 20, which utilizes a still to recover the alcohol.

Finally, a centrifugation step 22 involves centrifuging the residuals, i.e., "whole stillage", which includes non-fermentable components such as protein, oil, ash, minerals, and yeast yielded from the distillation and dehydration step 110, in order to separate the insoluble solids portion ("wet cake") from the liquid portion ("thin stillage"). The liquid from the centrifuge contains about 5% to 12% DS. The "wet cake" includes fiber, of which there generally are three types: (1) pericarp, with average particle sizes typically about 1 mm to 3 mm; (2) tipcap, with average particle sizes about 500 micron; (3) and fine fiber, with average particle sizes of about 250 microns. There may also be proteins and yeast bodies (inactive or lysed yeast), with a particle size of about 45 microns to about 300 microns. The fiber and other fractions may contain bound protein that is chemically and or physically attached to the fiber and other fraction.

The thin stillage typically enters evaporators in an evaporation step 24 in order to boil or flash away moisture, leaving a thick syrup, which contains the soluble (dissolved) solids (mainly protein and starches/sugars as well as oil, ash/minerals, and fine fiber). The concentrated slurry can be sent to a centrifuge to separate the oil from the syrup in an oil recovery step 26. The oil can be sold as a separate high value product. The oil yield is normally about 0.7 lb/bu of corn with elevated free fatty acids content compared to traditional wet mill corn oil. This oil yield recovers only about 1/3 of the oil in the corn, with part of the oil passing with the syrup stream and the remainder being lost with the fiber/wet cake stream. About one-half of the oil inside the corn kernel remains inside the germ after the distillation step 20, which cannot be separated in the typical dry grind process using centrifuges as the oil is bound, not free. The free fatty acids content, which is created when the oil is heated and exposed to oxygen throughout the front and back-end process, reduces the value of the oil. The (de-oil) centrifuge only removes less than 50% because the protein and oil make an emulsion, which cannot be satisfactorily separated without the use of chemicals or added mechanical separation unit operations.

The syrup, which has more than 10% oil, can be mixed with the centrifuged wet cake then sold to beef and dairy feedlots as Distillers Wet Grain with Solubles (DWGS). Alternatively, the wet cake and concentrated syrup mixture may be dried in a drying step 28 and sold as Distillers Dried Grain with Solubles (DDGS) to dairy and beef feedlots. This DDGS has all the corn and yeast protein and about 67% of the oil in the starting corn material. But the value of DDGS is low due to the high percentage of fiber, and in some cases the oil is a hindrance to animal digestion and lactating cow milk quality.

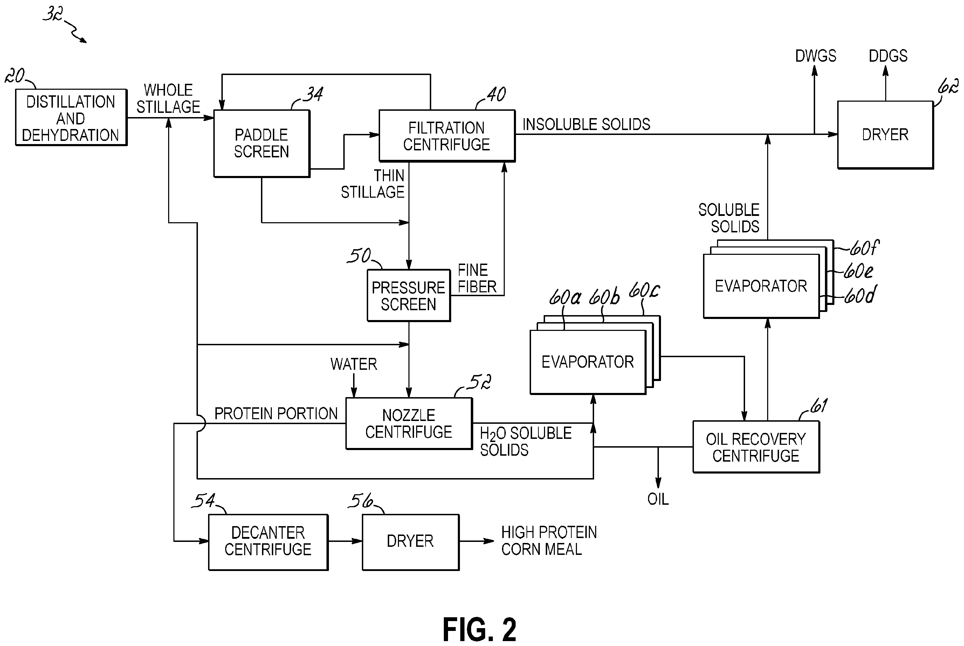

In accordance with the present invention, Fig. 2 shows an embodiment of a method and system for increasing oil yield, collectively numeral 32, from the whole stillage byproduct produced in a typical corn dry-milling process 10, like that just described in Fig. 1. While a typical whole stillage byproduct is utilized here, it should be understood that the whole stillage from any corn (or similar carbohydrate-containing grain or bean/legume) dry-milling process may be utilized with the same or similar results. Again, the whole stillage byproduct contains a slurry of soluble and insoluble solids, i.e., the spent grains from the distillation and dehydration step 20, which can include protein, amino acids, fiber, and oil, for example, that can be processed in accordance with embodiments of this invention to increase the yield of oil separated and recovered from the thin stillage. The recovered oil, which may be further processed, can be sold and/or used as or in, for example, cooking oil, renewable diesel feed stock, etc.

With continuing reference to Fig. 2, in one example, the whole stillage byproduct can be piped from the typical corn dry mill distillation and dehydration step 20 and subjected to an optional paddle screen 34. The optional paddle screen 34 is situated before a filtration centrifuge 40, which is further discussed below, so as to aid ultimately in separation of the insoluble solids portion (fiber) from the thin stillage portion (centrate) by initially filtering out desirable amounts of water, sulfur-containing amino acids (e.g., cysteine and methionine), oil, protein, and, incidentally, small fiber fines and yeast bodies from the whole stillage byproduct. This initial screening can help reduce the resulting load on the subsequent filtration centrifuge 40. The resulting thrus (underflow or centrate) from the paddle screen 34 eventually joins with the thin stillage underflow from the filtration centrifuge 40, as will be discussed in greater detail below.

To filter the whole stillage byproduct, the optional paddle screen 34 can include screen openings of no greater than about 750 microns. In another example, the paddle screen 34 can include openings therein of no greater than about 500 microns. In yet another example, the openings therein are no greater than about 250 microns. In yet another example, the openings therein are no greater than about 150 microns. In yet another example, the openings therein are no greater than about 50 microns. Other sizes, larger and smaller are possible. It should be understood that these values are exemplary and that those of ordinary skill in the art will recognize how to determine the size of the openings to achieve the desired filtration. In one example, the optional paddle screen 34 is a standard type paddle screen as is known in the art. One such suitable paddle screen 34 is the FQ-PS32 available from Fluid-Quip, Inc. of Springfield, Ohio. It should be understood that the optional paddle screen 34 may be replaced with other types of pre-concentration or solids separation devices, e.g., a standard pressure screen or conic centrifuge, which can perform the desired filtration or preconcentration function. One such suitable pressure screen is the PS-Triple available from Fluid-Quip, Inc. of Springfield, Ohio. In addition, although a single paddle screen 34 is depicted, it should be understood that a plurality of paddle screens 34 may be situated in-line, either parallel and/or in series, and utilized for filtering the whole stillage byproduct.

The whole stillage from the distillation and dehydration step 20, if the optional paddle screen 34 is not present, or the overflow from the optional paddle screen 34 is sent to the filtration centrifuge 40 whereat the whole stillage byproduct or overflow is separated into the insoluble solids portion, which includes fiber, and the thin stillage portion, which includes protein, sulfur-containing amino acids (e.g., cysteine and methionine), oil, etc. One such suitable filtration centrifuge is described in Lee et al., U.S. Patent No. 8,813,973 entitled "Apparatus and Method for Filtering a Material from a Liquid Medium", the contents of which are expressly incorporated by reference herein in its entirety. The filtration centrifuge 40 may be configured to perform both the initial filtering (sometimes referred to as a pre-concentration) of the whole stillage byproduct and washing of the fiber so as to clean the fiber and remove the protein, amino acids, oil, and other components that remain associated with the fiber after the initial filtration or pre-concentration.

With respect to the filtration centrifuge 40, the washing of the fiber may include a washing cycle, wherein the fiber is mixed and rinsed in wash water and/or other stream(s) from the process, followed by a de-watering cycle, wherein the wash water and/or other stream(s) is separated from the fiber. The washing of the fiber may include multiple rinsing/de-watering cycles. Additionally, a counter current washing technique may be employed to save wash water usage. After washing the fiber, but before the fiber exits the centrifuge, the fiber may go through an enhanced de-watering stage, a compaction stage, and/or an air-dryer stage to further de-water or dry the fiber. This may increase the dryer capacity or eliminate the dryer altogether. Eventually, the washed and filtered fiber exits the filtration centrifuge 40 so that the fiber can be further processed, as discussed further below to result in a desired product, such as DWGS or DDGS. In one example, the fiber can be transported to a remote site for further processing, such as anaerobic or aerobic digestion, conversion to C5 and C6 sugar molecules for biofuel or biochemical conversion processes. Moreover, any separated out portion of slurry from the fiber, e.g., protein, water, amino acids (including sulfur-containing amino acids), oil, wash water, etc., which occurs via screening at the filtration centrifuge 40, is collected to define the thin stillage (centrate), then transported and further processed as described below. Optionally, a portion of the slurry (fiber centrate) and/or wash water may be piped back to the optional paddle screen 34 for further reprocessing. The filtration centrifuge 40 may provide the filtered material at a water concentration of between about 55% and about 75% water, which is a significant reduction compared to conventional filtration systems.

With continuing reference to Fig. 2, although a single filtration centrifuge 40 is depicted, it should be understood that a plurality of filtration centrifuges 40 may be situated in-line, either in parallel and/or in series, and utilized for separating the whole stillage byproduct into its insoluble solids portion (fiber) and thin stillage portion. And in an alternate embodiment, it is contemplated that any filtration centrifuge 40 can be replaced by a standard pressure screen, decanter centrifuge, paddle screen, desludging device, dewatering device (e.g., a dewatering press), or other like devices as are known in the art to separate the whole stillage byproduct into the insoluble solids portion, thin stillage portion, and fiber centrate portion. One such suitable pressure screen is the PS-Triple available from Fluid-Quip, Inc. of Springfield, Ohio. One such suitable decanter centrifuge is the NX-944HS available from Alfa Laval of Lund, Sweden. And one such suitable paddle screen is the FQ-PS32 available from Fluid-Quip, Inc. of Springfield, Ohio.

As further shown in Fig. 2, the thin stillage centrate (underflow) from the filtration centrifuge 40 may be combined with the thrus (underflow or centrate) from the optional paddle screen 34 and the resulting thin stillage centrate may be subjected to an optional standard pressure screen, as is known in the art, to further aid in separation of any fine fiber from the thin stillage portion. If the optional paddle screen 34 is not present, the thin stillage centrate (underflow) from the filtration centrifuge 40 is sent directly to optional pressure screen 50. Prior to being subjected to the optional pressure screen, the thin stillage can include a total solids loading of about 5% to 15% and a protein content of at least about 20% up to 30% or greater on a dry basis. Key amino acids and typical corn protein content is contained in this stream. In one example, the thin stillage, which includes protein, can be further optionally dried, such as by being sent to a dryer, such as dryer 56, e.g., a spray, flash, ring dryer, or rotary as are known in the art, and/or a crystallizer prior to the optional pressure screen 50, and resulting protein product used as animal feed product, or fertilizer, or for further processing.

Fiber having a size less than that of the screen of the filtration centrifuge 40 and/or optional paddle screen 34 may pass through and to subsequent steps of the corn dry mill process. At the pressure screen 50, the fine fiber can be separated from the thin stillage and piped back to the filtration centrifuge 40 whereat the fine fiber may be filtered out. One such suitable pressure screen 50 is the PS-Triple available from Fluid-Quip, Inc. of Springfield, Ohio. In an alternate embodiment, the optional pressure screen 50 may be replaced with a standard paddle screen or decanter centrifuge, as are mentioned above, or other like device, to aid in separation of the fine fiber from the thin stillage portion. In addition, although a single pressure screen 50 is depicted, it should be understood that a plurality of pressure screens 50 may be situated in-line, either in parallel and/or in series, and utilized for filtering the thin stillage centrate (underflow).

The remaining thin stillage portion from the optional pressure screen 50 can be piped and subjected to a centrifuge 52, as is known in the art. Alternatively, if the optional pressure screen 50 is not present, the thin stillage centrate can be sent directly to the centrifuge 52. The centrifuge 52 can be provided with washing capabilities so that water, or similar aqueous solutions, along with the thin stillage portion, can be supplied to the centrifuge 52. At this step, the additional water or aqueous solution allows for easier separation of the thin stillage into its protein portion and a water-soluble solids portion. The heavier protein portion, which can include corn and yeast protein, separates from the lighter water-soluble solids portion and is removed as the underflow whereas the lighter water-soluble solids portion, which includes oil and sugars, can be removed as the overflow. One such suitable centrifuge 52 is the FQC-950 available from Fluid-Quip, Inc. of Springfield, Ohio, which is a nozzle centrifuge. In an alternate embodiment, the centrifuge 52 can be replaced with a standard cyclone apparatus or other like device, as are known in the art, to separate the thin stillage portion into the underflow protein portion and overflow water-soluble solids portion. One such suitable cyclone apparatus is the RM-12-688 available from Fluid-Quip, Inc. of Springfield, Ohio.

The underflow protein portion from the centrifuge 52 can then be piped and subjected to a decanter centrifuge 54. At the decanter centrifuge 54, the protein portion, which can include corn and yeast protein, is dewatered to provide a dewatered protein portion. The decanter centrifuge 54 is standard and known in the art. One such suitable decanter centrifuge 54 is the SG806 available from Alfa Laval of Lund, Sweden. Other like devices are contemplated. In addition, although a single decanter centrifuge 54 is depicted, it should be understood that a plurality of decanter centrifuges 54 may be situated in-line, either in series or parallel, and utilized for filtering the protein portion. The separated liquid portion or centrate from the decanter centrifuge 54 may be recycled back, for example, as backset to the liquefaction step 14 or the fermentation step 18 for reuse in the dry mill process or used in further biochemical, algae, or other applications. In another example, the centrate from the decanter centrifuge 54 may be recycled back to one or more of the optional paddle screen 34, centrifuge 52, or filtration centrifuge 40. In an alternate embodiment, the decanter centrifuge 54 may be replaced with a standard filter press or rotary vacuum, or other like device, as are known in the art, to dewater the thin stillage portion. A water portion or filtrate from the decanter centrifuge 54 may be recycled back, for example, to liquefaction step 16 or fermentation step 20 for reuse in the dry-milling process.

The dewatered protein portion from the decanter centrifuge 54 can be further optionally dried, such as by being sent to dryer 56, e.g., a rotary dryer, spray dryer, flash dryer, ring dryer, an air classifier dryer, or a crystallizer, or the like, as is known in the art. In another embodiment, the dewatered protein portion can be subjected to vacuum filtration, a crystallizer, or other drying methods, as are known in the art. The dewatered (and optionally dried) protein product defines a high protein meal that includes at least 40 wt% protein on a dry basis and which may be sold as pig or chicken feed, for example. In another embodiment, the high protein meal includes at least 40 wt% protein on a dry basis. In another embodiment, the high protein meal includes at least 45 wt% protein on a dry basis. In yet another embodiment, the high protein meal includes at least 50 wt% protein on a dry basis. In yet another embodiment, the high protein meal includes at least 60 wt% protein on a dry basis. In still another embodiment, the high protein meal includes about 56 wt% protein on a dry basis. The protein in the high protein meal includes grain (e.g., corn) protein and may also contain yeast protein and/or yeast bodies. The amount of yeast protein in the protein of the high protein meal can vary and, in one example, can include less than 5% of the total protein content. In another example, the yeast protein can be from 0.1% to 5% of the total protein content. In another example, the yeast protein can include at least 5% total protein content. In another example, the yeast protein can include from about 5% to 40% of the total protein content. And in another example, the yeast protein can include 40% or more of the total protein content. The resulting high protein meal may be sold at a much higher cost per ton than DDGS or DWGS.

Returning now to the separated water-soluble solids portion or filtrate from the centrifuge 52, as shown in Fig. 2, the overflow water-soluble solids portion, which includes oil as well as minerals and soluble proteins, can be piped from the centrifuge 52 and subjected to a set of three evaporators 60a, 60b, and 60c, as are known in the art, to begin separating the soluble solids from the water-soluble solids portion. In one embodiment, at least a portion of the water-soluble solids portion may be recycled back or combined with the centrate from the decanter centrifuge 54 and recycled back, for example, as backset to the liquefaction step 14 or the fermentation step 18 for reuse in the dry mill process. Returning again to the evaporators, the evaporators 60a-c evaporate the liquid portion of the water-soluble solids portion. Thereafter, the water-soluble solids portion can be piped and subjected to an oil recovery centrifuge 61, as is known in the art, so that oil can be removed therefrom. The oil recovery centrifuge 61 can include a stacked disc centrifuge, a decanter centrifuge, a screen centrifuge, and the like, or combinations thereof. It should be understood that the oil recovery centrifuge 61 may be replaced with other types of oil recovery devices, e.g., a press, an extruder, an air flotation device (e.g., a dissolved air flotation device (DAF)), and the like, or combinations thereof, which can perform the desired oil recovery function. One such suitable oil recovery centrifuge 61 is the ORPX 617 available from Alfa Laval of Lund, Sweden. In one example, the final recovered oil product can include between about 40 wt% to about 60 wt% of the total corn oil in the corn. In comparison to typical oil recovery in a standard dry-milling process, oil recovery centrifuge 61 can function at a higher capacity because the water-soluble solids portion, which is subjected to the oil recovery centrifuge 61, includes less liquid and less protein and fiber than normal thin stillage or evaporated thin stillage.

As a result of process operations resulting in the agitation and churning of the thin stillage, pH, and/or the presence of small, insoluble solids, specifically protein, in the thin stillage, at least a portion of the free corn oil in the water-soluble solids portion can be bound in an oil-in-water emulsion. The oil-in-water emulsions capture and bind oil and can impede the separation of the free oil from the water-soluble solids portion. To release bound oil from the emulsions, a portion of the oil recovered from the oil recovery centrifuge 61 may be re-introduced into the water-soluble solids portion before the oil recovery centrifuge 61, sent back to the whole stillage stream, introduced back to the feed of the centrifuge 52, or any combination thereof, as shown in Fig. 2.

The recovered oil from step 61 optionally can be treated prior to reintroduction to one or more of the several points as previously described. Oil treatment can include one or more of the following processing options, including heating the recovered oil prior to reintroducing it into the process, pH adjustment with a base chemical (such as sodium hydroxide, potassium hydroxide, and the like), or addition of an enzyme, a surfactant, a chelating agent, or a flocculant, or causing an ionic change in the process solution, for example. Also, the oil treatment/oil treatment components optionally can be added to the water-soluble solids portion/stream at any step prior to or during the oil recovery centrifuge step 61, as well as after step 61 to the recovered oil stream.

In one example, heating of the water-soluble solids stream prior to the oil recovery centrifuge step 61 can include heating and holding the water-soluble solids portion for two minutes to greater than 180 minutes at temperatures of 180°F to 210°F. Time and temperature can be based on syrup solids in the water-soluble solids portion or oil stream and the soluble and insoluble ratio within that stream/portion. Higher levels of insoluble components may require longer holding times to ensure the free oil can separate from the insoluble components. In another example, the holding time can be from 30 minutes to 60 minutes. In another example, the holding time can be from 45 minutes to 90 minutes. In another example, the holding time can be from 120 to 180 minutes and, yet, in another example, the holding time can be 120 minutes. In another example, the temperature can be from 180°F to 185°F. In another example, the temperature can be from 200°F to 205°F and, yet, in another example, the temperature can be from 195°F to 200°F. Heating can be accomplished by both direct and indirect heating. Indirect heating can be achieved by a variety of heat exchangers, including plate and frame as well as a tube and shell systems. One such suitable shell and tube heat exchanger is available from Dedert Corp. of Homewood, IL. Direct heating may be provided by the injection of steam or other hot liquids (e.g., steam condensate) into the water-soluble solids portion or recovered oil stream. Heating and holding may be accomplished in a separate holding tank (not shown), if needed.

pH can also impact the oil liberation and final oil yield, such as due to the polarity of oil and how it interacts with other molecules in solution. The water-soluble solids portion/stream can fall within the 3.8 to 4.2 pH range, which can be dependent upon upstream processes as well as other pH control additions throughout the process. The holding time may be determined by the process conditions, if the pH was adjusted, or if other components have been added, such as enzymes, surfactants, a flocculant, and/or a chelating agent. pH adjustment to higher or more basic pH ranges can have a positive result and help liberate and/or coagulate free oil together to form larger oil droplets. As free oil molecules bind together, higher yields can be achieved. In one example, the pH can be adjusted to 7 to 11. In another example, the pH can be from about 7.5 to about 9, about 8 to about 10, or about 9.5 to about 11. The dosage or addition rates for each oil treatment can vary depending on the final oil yield desired.

The addition/re-introduction of the recovered oil into the oil-in-water emulsions can provide an energy or an ionic bond strength imbalance in the emulsion that causes the water and/or protein in the emulsion to separate from the oil, for example, due to a change in the ionic strength of the chemical bond that helps form the emulsion. This operation can free the bound oil in the water-soluble solids portion, which is then available to be removed in the oil recovery centrifuge 61. As a result of the release of the bound oil from the emulsions, i.e., as a result of recycling a portion of the recovered oil, the oil yield can increase by 4% and can include 0.15 pounds per bushel (Ib/Bu) oil or greater. In another example, the oil yield can increase by 7% compared to not recycling the oil. In one example, after recycling, the final recovered oil product can include between about 0.45 lb/Bu to about 1.1 Ib/Bu or greater of the total oil in the corn. Further, in one embodiment and as indicated above, a surfactant and/or a flocculent can be added at and/or prior to the oil recovery centrifuge 61 to help further increase oil yield recovery. Because bound oil can be released due to the recycled oil, the amount of emulsion breaker or surfactant used may be decreased as compared to a process without the introduction of the recycled oil before the oil recovery centrifuge 61. The final oil recovered from the oil recovery centrifuge 61, after oil recycling, may be further processed and can be sold and/or used as or in, for example, cooking oil, for conversion to biodiesel or renewable diesel, aviation fuel, or an animal feed. The yield or improved recovery of the corn oil can be directly related to the starting corn kernel oil content and, thus, a wide range of yield improvements can be realized across the dry grind industry.

With further reference to Fig. 2, the remainder of the water-soluble solids portion from the oil recovery centrifuge 61 can be piped and subjected to another set of three evaporators 60d, 60e, and 60f whereat the liquid portion is further evaporated from the water-soluble solids portion to ultimately yield a soluble solids portion. While the water-soluble solids portion is shown subjected to two sets of three evaporators 60a-c, 60d-f, it should be understood that the number of evaporators and sets thereof can be varied, i.e., can be more or less, from that shown depending on the particular application and result desired.

In one example, the resulting soluble solids portion may be combined with the insoluble solids portion, e.g., fiber, received from the filtration centrifuge 40 to provide DWGS, which may be further dried by a drier 62, as is known in the art, to provide DDGS, both of which can be sold to dairy and beef feedlots, as well as other monogastric species such as swine and poultry. In another example, the soluble solids portion may be used as a natural fertilizer and/or herbicide. In another example, the soluble solids portion may be used as a raw material feed source for conversion to simple sugar, which can be further converted to bioethanol or used in other biochemical processes. In another example, the soluble solids portion may be used as a raw material feed source for a digestion or conversion process to process single cell proteins.

Accordingly, in this dry-milling process, neither the DDGS nor DWGS receive the typical concentrated syrup from the evaporators 60a-f. Despite the lower protein content, the DDGS and DWGS may still be sold to beef and dairy feedlots as cattle feed or other animal feed markets.

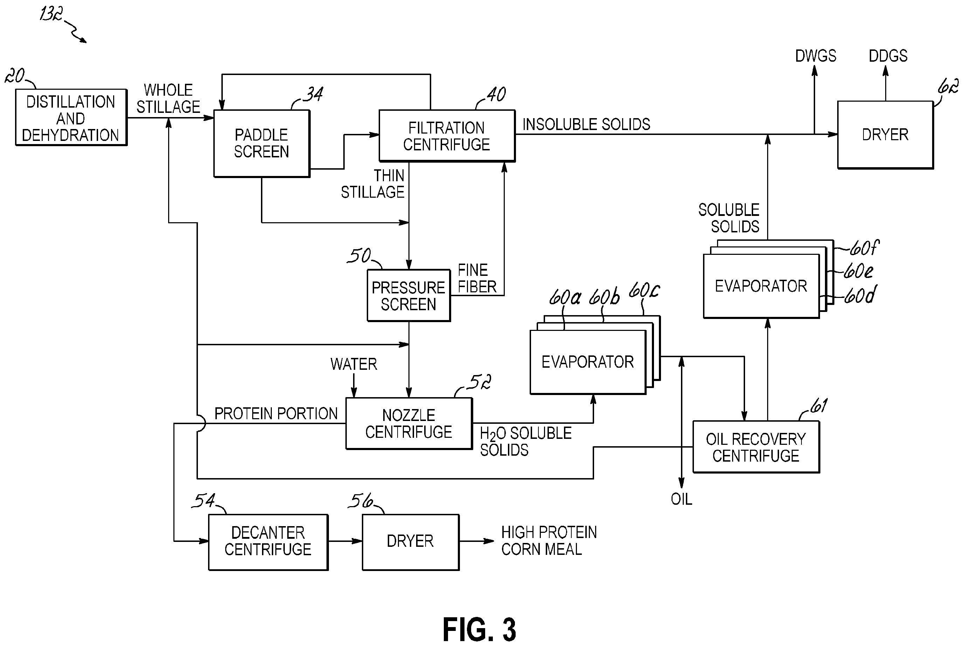

It should be recognized that a portion of the oil recovered, whether heated or not, at oil centrifuge 61 may be introduced at yet other locations in the process other than that shown in the method and system 32 of Fig. 2. To that end and with reference now to Fig. 3, another embodiment of a method and system for increasing oil yield, collectively numeral 132, from a whole stillage byproduct produced in a typical corn dry-milling process 10, is shown. In this embodiment, in contrast to the method and system 32 shown in Fig. 2, a portion of the oil recovered from the oil recovery centrifuge 61, which may be treated as discussed above (e.g., heated), is re-introduced/recycled to the water-soluble solids portion at any point before the oil recovery centrifuge 61 but upstream of the evaporators 60a-c, as well as optionally to one or more of the other locations discussed above with respect to Fig. 2.

While the present invention has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. Thus, the invention in its broader aspects is therefore not limited to the specific details, representative apparatus and method, and illustrative example shown and described. Accordingly, departures may be made from such details without departing from the scope of applicant's general inventive concept.

## Claims

1. A method for increasing oil yield from a whole stillage comprising:
separating a whole stillage byproduct into an insoluble solids portion and a thin stillage portion, which includes free oil and protein;
separating out a lighter water soluble solids portion, which includes the oil, from heavier constituents, including the protein, in the thin stillage portion;
subjecting the separated water soluble solids portion to evaporation via at least one first evaporator;
after the evaporation, separating the oil from the water soluble solids portion via an oil recovery centrifuge to provide an oil portion;
returning at least a portion of the separated oil portion to a step in the method prior to separating the oil from the water soluble solids portion, whereby oil bound in an oil-in-water emulsion in the portion of the separated oil can be freed; and
thereafter, recovering freed oil via the oil recovery centrifuge.

2. The method of claim 1 wherein at least the portion of the separated oil portion is returned to the whole stillage byproduct, the water soluble solids portion prior to evaporation, or the water soluble solids portion after evaporation.

3. The method of claim 1 or 2 wherein the oil recovery centrifuge is a disc centrifuge, a decanter centrifuge, or a screen centrifuge.

4. The method of at least one of claims 1 to 3 further comprising subjecting the portion of the separated oil portion to an oil treatment step.

5. The method of claim 4 wherein the oil treatment step includes heating the portion of the separated oil portion prior to returning the portion to a step in the method; and/or wherein the oil treatment step includes heating the portion of the separated oil portion after returning the portion to a step in the method; and/or
wherein the oil treatment step includes increasing pH of the portion of the separated oil portion to a pH of 7 to 11 via a base chemical; and/or
wherein the oil treatment step includes adding an enzyme, a surfactant, a chelating agent, or a flocculant to the portion of the separated oil portion; and/ or
wherein the oil treatment step includes causing an ionic change in the portion of the separated oil portion.

6. The method of at least one of claims 1 to 5 further comprising heating the water-soluble solids stream prior to or during the oil recovery centrifuge step at a temperature from 180°F to 210°F; preferably wherein the water-soluble solids portion is subjected to the temperature for 2 to 180 minutes.

7. The method of at least one of claims 1 to 6 further comprising adding an enzyme, a surfactant, a chelating agent, or a flocculant to the water solubles solids portion.

8. The method of at least one of claims 1 to 7 wherein separating a whole stillage byproduct into an insoluble solids portion and a thin stillage portion, which includes free oil and protein, includes subjecting the whole stillage byproduct to a filtration centrifuge, a decanter centrifuge, a pressure screen, or a paddle screen to separate the whole stillage byproduct into the solids portion and the thin stillage portion.

9. The method of at least one of claims 1 to 8 wherein separating out the lighter water soluble solids portion, which includes the oil, from heavier constituents, including the protein, in the thin stillage portion via weights, includes subjecting the thin stillage portion to a nozzle centrifuge or a cyclone apparatus to separate out the lighter water soluble solids portion, which includes the oil, from heavier constituents, including the protein, in the thin stillage portion via weights.

10. The method of at least one of claims 1 to 9 further comprising, after separating out the lighter water soluble solids portion, drying the heavier constituents, including the protein, to define a high protein corn meal that includes at least 40 wt % protein on a dry basis; preferably wherein the high protein corn meal defines an animal feed.

11. The method of at least one of claims 1 to 10 further comprising, after separating the oil from the water soluble solids portion via an oil recovery centrifuge to provide an oil portion, subjecting the water soluble solids portion to another evaporation via at least one second evaporator.

12. The method of at least one of claims 1 to 11 wherein subjecting the separated water soluble solids portion to evaporation via at least one first evaporator comprises subjecting the separated water soluble solids portion to evaporation via a first series of evaporators.

13. The method of at least one of claims 1 to 12 further comprising, after evaporation and prior to separating the oil from the water soluble solids portion via an oil recovery centrifuge to provide an oil portion, subjecting the evaporated water soluble solids portion to an oil treatment step wherein the oil treatment step includes increasing pH of the water soluble solids portion to a pH of 7 to 11.

14. A method for increasing oil yield from a whole stillage comprising:
separating a whole stillage byproduct into an insoluble solids portion and a thin stillage portion, which includes free oil and protein;
separating out a lighter water soluble solids portion, which includes the oil, from heavier constituents, including the protein, in the thin stillage portion, via weights;
subjecting the separated water soluble solids portion to evaporation via at least one first evaporator;
after the evaporation, separating the oil from the water soluble solids portion via an oil recovery centrifuge to provide an oil portion;
returning at least a portion of the separated oil portion to the whole stillage byproduct, the water soluble solids portion prior to the evaporation, or the water soluble solids portion after evaporation;
subjecting the portion of the separated oil portion to an oil treatment step prior to or after returning the portion of the separated oil portion to the whole stillage byproduct, the water soluble solids portion prior to evaporation, or the water soluble solids portion after the evaporation, whereby oil bound in an oil-in-water emulsion in the portion of the separated oil can be freed; and
thereafter, recovering freed oil via the oil recovery centrifuge.

15. The system of claim 14 wherein the oil recovery centrifuge is a disc centrifuge, a decanter centrifuge, or a screen centrifuge.

16. The system of claim 14 or 15 wherein the oil treatment step includes heating the portion of the separated oil portion.

17. The method of at least one of claims 14 to 16 further comprising, after separating the oil from the water soluble solids portion via an oil recovery centrifuge to provide an oil portion, subjecting the water soluble solids portion to another evaporation via at least one second evaporator.

18. The method of at least one of claims 14 to 17 wherein subjecting the separated water soluble solids portion to evaporation via at least one first evaporator comprises subjecting the separated water soluble solids portion to evaporation via a first series of evaporators.
